# FASCICULE DE BREVET EUROPEEN

(11) **EP 4 023 494 B1**
(45) Date de publication et mention de la délivrance du brevet: **13.09.2023**
(21) Numéro de dépôt: 21212450.7
(22) Date de dépôt: 06.12.2021
(51) Int. Cl.: B60P 3/22

(54) **VÉHICULE DE LIVRAISON DE FLUIDE INFLAMMABLE**
LIEFERFAHRZEUG FÜR BRENNBARE FLÜSSIGKEITEN
FLAMMABLE FLUID DELIVERY VEHICLE

(30) Priorité: 04.01.2021 FR 2100014
(43) Date de publication de la demande: 06.07.2022
(73) Titulaire: Cryolor Société Anonyme, 57640 Argancy (FR)
(72) Inventeur: VARRASSI, Lucien, 57640 ARGANCY (FR); GIBAUX, Etienne, 57640 ARGANCY (FR)
(74) Mandataire: Air Liquide

(56) Documents cités:
- FR-A1- 2 156 591
- GB-A- 2 264 271
- US-A- 5 263 824

## Description

L'invention concerne un véhicule de livraison de fluide inflammable.

L'invention concerne plus particulièrement un véhicule de livraison de fluide inflammable, notamment de fluide liquéfié tel que de l'hydrogène, comprenant un engin de traction et un réservoir monté sur un support tracté par l'engin de traction, le véhicule comprenant un circuit de fluide relié au réservoir pour le remplissage et/ou le soutirage de fluide, le circuit de fluide comprenant un ensemble de vanne(s) pneumatique(s), le véhicule comprenant en outre un circuit électrique comprenant au moins un composant électrique du support tracté par l'engin de traction, le véhicule comprenant une source d'électricité reliée de façon amovible au circuit électrique via au moins un port de branchement au niveau d'une interface de branchement. L'invention concerne en particulier les véhicules du type semi-remorque, cryogénique ou non, qui transportent des gaz ou liquides inflammables tel que par exemple l'hydrogène, le gaz naturel, l'éthylène...

L'invention peut s'appliquer néanmoins à type d'environnement explosif (Atex, NFPA ou autre). Des exemples de véhicules de livraison de fluide inflammable sont connus par exemple de FR 2 156 591 A1, GB 2 264 271 A et US 5 263 824 A.

Lors du dépotage (vidange) de la semi-remorque dans un réservoir ou une installation qui est dans une zone à atmosphère explosive (ATEX) il est requis de couper l'électricité de la partie routière arrière (feux) qui elle n'est pas compatible avec les exigences de sécurité ATEX.

Le raccordement électrique entre la source (véhicule tracteur) et l'arrière du véhicule utilise généralement un jeu de câble(s) électriques et un ou plusieurs prises électriques (à 15 ou 7 broches « pin » par exemple).

Ainsi, lors du chargement ou déchargement d'un liquide ou gaz inflammable d'une semi-remorque, il est nécessaire de mettre en sécurité ATEX l'environnement du chargement ou déchargement. C'est-à-dire que, sur les tracteurs ou semi-remorques, l'électricité de la partie routière doit être neutralisée pendant ces opérations.

Dans les configurations connues, cette mise en sécurité repose essentiellement sur l'opérateur, ce qui présente des risques. Un but de la présente invention est de pallier tout ou partie des inconvénients de l'art antérieur relevés ci-dessus.

A cette fin, le véhicule selon l'invention, par ailleurs conforme à la définition générique qu'en donne le préambule ci-dessus, est essentiellement caractérisé en ce que l'interface de branchement comprend un cache mobile entre une première position bloquant l'accès au(x) port(s) de branchement pour empêcher la liaison électrique entre la source d'électricité et le circuit électrique, et une seconde position ne bloquant pas l'accès au port(s) de branchement pour autoriser la liaison électrique entre la source d'électricité et le circuit électrique, le véhicule comprenant en outre un interrupteur relié au circuit de fluide et commutable entre un premier état autorisant le fonctionnement de l'ensemble de vanne(s) pneumatique(s) du circuit de fluide pour permettre un remplissage ou un soutirage, et un second état n'autorisant pas le fonctionnement de l'ensemble de vanne(s) pneumatique(s) du circuit de fluide pour empêcher un remplissage ou un soutirage, et en ce que, dans sa première position, le cache mobile commute l'interrupteur ou permet sa commutation dans son premier état, en ce que lorsque le cache mobile est dans sa seconde position, l'interrupteur est commuté automatiquement dans son second état.

Par ailleurs, des modes de réalisation de l'invention peuvent comporter l'une ou plusieurs des caractéristiques suivantes :
- le véhicule comprend un organe de rappel, tel qu'un ressort, sollicitant l'interrupteur vers son second état,
- dans sa première position, le cache mobile exerce un effort sur l'interrupteur, par exemple un effort de poussée, à l'encontre de l'effort de l'organe de rappel et dispose et maintient l'interrupteur dans son premier état,
- l'interrupteur est du type pneumatique,
- le cache est mobile en rotation et/ou en translation entre ses première et seconde positions,
- dans son second état, l'interrupteur ouvre au moins une partie du circuit de fluide pour empêcher une mise en pression et la commande pneumatique d'au moins une vanne du circuit de fluide,
- l'engin de traction comprend ou constitue la source d'électricité, cette source d'électricité étant reliée à l'interface de branchement du port de branchement via un ensemble de câbles électrique(s),
- le au moins un composant électrique comprend un feux de signalisation du véhicule.

L'invention peut concerner également tout dispositif ou procédé alternatif comprenant toute combinaison des caractéristiques ci-dessus ou ci-dessous dans le cadre des revendications. D'autres particularités et avantages apparaîtront à la lecture de la description ci-après, faite en référence aux figures dans lesquelles :
[Fig. 1] représente une vue en perspective, schématique et partielle, illustrant un exemple de structure de véhicule selon l'invention,
[Fig. 2] représente une vue de face, schématique et partielle, d'un détail du véhicule illustrant un exemple de structure et de fonctionnement des circuits électrique et fluide du véhicule dans une première configuration de fonctionnement,
[Fig. 3] représente une vue de face, schématique et partielle, d'un détail du véhicule illustrant un exemple de structure et de fonctionnement des circuits électrique et de fluide du véhicule dans une seconde configuration de fonctionnement,
[Fig. 4] représente une autre vue, schématique et partielle, d'un détail du véhicule illustrant un exemple de structure et de fonctionnement des circuits électrique et fluide du véhicule.

Le véhicule 1 illustré comprend par exemple un engin 2 de traction (camion) et un réservoir 4 monté sur un support 13 tracté par l'engin 2 de traction. Le support 13 peut être par exemple détachable du camion (remorque attelée).

Le véhicule 1 comprend un circuit 5 de fluide relié au réservoir 4 pour le remplissage et/ou le soutirage de fluide. Le circuit 5 de fluide comprend classiquement un ensemble de vanne(s) 12, 14 pneumatique(s). Tout ou partie des vannes sont par exemple logées dans une armoire de commande.

Le véhicule 1 comprend en outre un circuit 6 électrique comprenant au moins un composant 16 électrique du support 13 tracté par l'engin 2 de traction. Le au moins un composant électrique peut comprendre notamment des feux 16 de signalisation arrière du véhicule ou tout autre composant approprié par exemple un système de contrôle de freinage de type « ABS ».

Le véhicule 1 comprend une source 2 d'électricité (batterie par exemple) reliée de façon amovible au circuit 6 électrique via au moins un port 9 de branchement au niveau d'une interface 3 de branchement. Par exemple, l'engin 2 de traction comprend la source d'électricité et cette source 2 d'électricité est reliée à la partie arrière via un ensemble de câbles 7 électrique(s) qui se branchent au niveau d'une interface 3 de branchement comprenant des ports (prises) 9 de branchement.

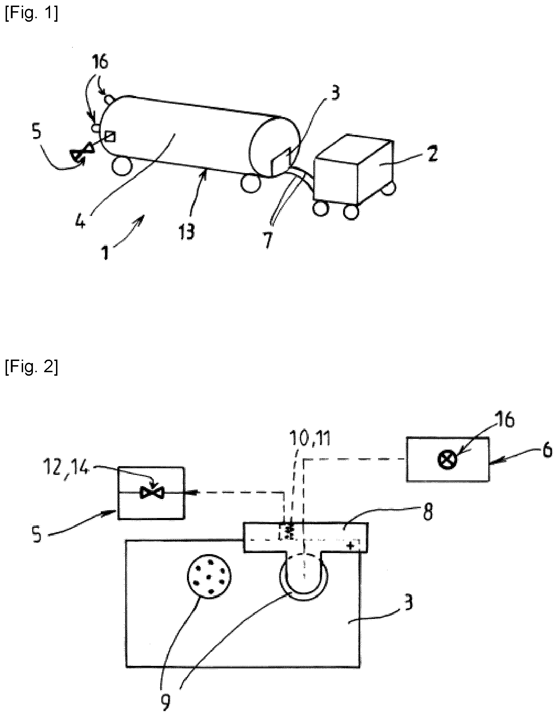

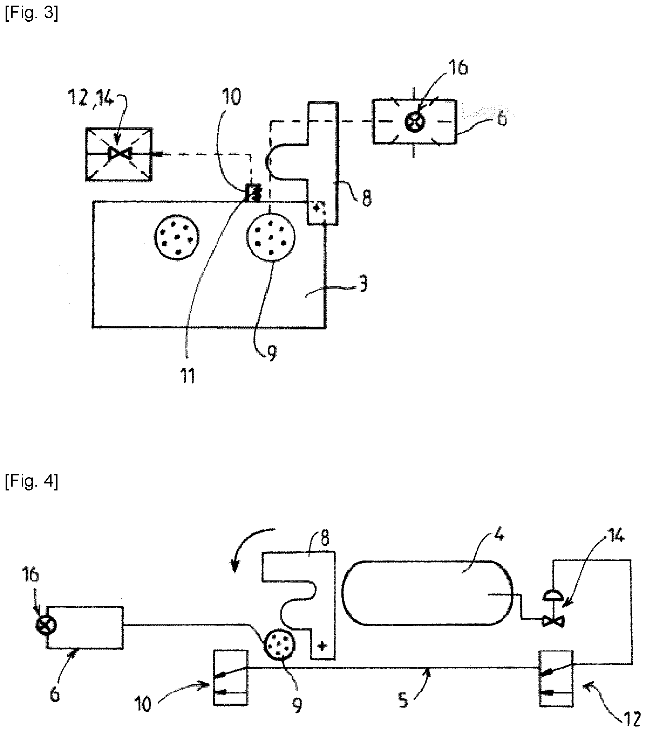

Selon une particularité avantageuse, l'interface 3 de branchement comprend un cache 8 (ou volet) mobile entre une première position bloquant l'accès au(x) port(s) 9 de branchement pour empêcher la liaison électrique entre la source 2 d'électricité et le circuit 6 électrique (cf. [Fig. 2]) et une seconde position ne bloquant pas l'accès au port(s) 9 de branchement pour autoriser la liaison électrique entre la source 2 d'électricité et le circuit 6 électrique (cf. [Fig. 3]).

Par exemple, dans sa première position le cache 8 se place devant la ou les prises 9 tandis que dans sa seconde position il est placé à côté.

Le véhicule 1 comprend en outre un interrupteur 10 relié au circuit 5 de fluide et commutable entre un premier état (cf. [Fig. 2]) autorisant le fonctionnement de l'ensemble de vanne(s) 12, 14 pneumatique(s) du circuit 5 de fluide pour permettre un remplissage ou un soutirage, et un second état (cf. [Fig. 3]) n'autorisant pas le fonctionnement de l'ensemble de vanne(s) pneumatique(s) 12, 14 du circuit (5) de fluide pour empêcher un remplissage ou un soutirage.

Dans sa première position, le cache 8 mobile commute l'interrupteur 10 ou permet sa commutation dans son premier état, et, lorsque le cache 8 mobile est dans sa seconde position, l'interrupteur 10 est commuté automatiquement dans son second état.

Comme illustré, le cache 8 peut être mobile en rotation manuellement. Bien entendu tout autre type de déplacement (translation...) peut être prévu entre ses première et seconde positions.

Par exemple, organe 11 de rappel, tel qu'un ressort, sollicite l'interrupteur 10 vers son second état. Dans sa première position, le cache 8 mobile exerce un effort sur l'interrupteur 10, par exemple un effort de poussée (appui), à l'encontre de l'effort de l'organe 11 de rappel et dispose et maintient l'interrupteur 10 dans son premier état.

De préférence l'interrupteur 10 est du type pneumatique.

Comme schématisé à la [Fig. 3], par exemple, dans son second état, l'interrupteur 10 ouvre au moins une partie du circuit 5 de fluide pour empêcher une mise en pression et la commande pneumatique d'au moins une vanne 12, 14 du circuit 5 de fluide. Le remplissage ou soutirage est empêché par la désactivation des vannes 12, 14 de commande du circuit 5 fluide.

Ainsi, dans le cas d'un chargement et déchargement de fluide (atmosphère ATEX c'est-à-dire explosive), l'opérateur doit déplacer le cache 8 qui vient obstruer l'ouverture de la prise 9 électrique et ainsi empêche la connexion du circuit électrique via une prise mâle du tracteur 2. L'interrupteur 10 agit comme un capteur pneumatique et active et l'ouverture des vannes 12, 14 pneumatiques de déchargement ou chargement qui se trouvent à l'arrière de la du véhicule 1.

Le transfert de fluide est rendu possible en toute sécurité (pas de mise sous tension du circuit 6 électrique).

Pour reprendre la route, la prise 9 électrique doit être connectée pour alimenter électriquement le circuit électrique du véhicule 1.

L'interrupteur 10 est alors désactivé et les vannes pneumatiques 10, 12 sont fermées et désactivées, garantissant l'absence d'hydrogène.

## Revendications

1. Véhicule de livraison de fluide inflammable, notamment de fluide liquéfié tel que de l'hydrogène, comprenant une engin (2) de traction et un réservoir (4) monté sur un support (13) tracté par l'engin (2) de traction, le véhicule (1) comprenant un circuit (5) de fluide relié au réservoir (4) pour le remplissage et/ou le soutirage de fluide, le circuit (5) de fluide comprenant un ensemble de vanne(s) (12, 14) pneumatique(s), le véhicule (1) comprenant en outre un circuit (6) électrique comprenant au moins un composant (16) électrique du support (13) tracté par l'engin (2) de traction, le véhicule (1) comprenant une source (2) d'électricité reliée de façon amovible au circuit (6) électrique via au moins un port (9) de branchement au niveau d'une interface (3) de branchement, **caractérisé en ce que** l'interface (3) de branchement comprend un cache (8) mobile entre une première position bloquant l'accès au(x) port(s) (9) de branchement pour empêcher la liaison électrique entre la source (2) d'électricité et le circuit (6) électrique, et une seconde position ne bloquant pas l'accès au port (s) (9) de branchement pour autoriser la liaison électrique entre la source (2) d'électricité et le circuit(6) électrique, le véhicule (1) comprenant en outre un interrupteur (10) relié au circuit (5) de fluide et commutable entre un premier état autorisant le fonctionnement de l'ensemble de vanne (s) (12, 14) pneumatique (s) du circuit (5) de fluide pour permettre un remplissage ou un soutirage, et un second état n'autorisant pas le fonctionnement de l'ensemble de vanne(s) pneumatique(s) (12, 14) du circuit (5) de fluide pour empêcher un remplissage ou un soutirage, et **en ce que**, dans sa première position, le cache (8) mobile commute l'interrupteur (10) ou permet sa commutation dans son premier état, et **en ce que** lorsque le cache (8) mobile est dans sa seconde position, l'interrupteur (10) est commuté automatiquement dans son second état.

2. Véhicule selon la revendication 1, **caractérisé en ce qu'**il comprend un organe (11) de rappel, tel qu'un ressort, sollicitant l'interrupteur (10) vers son second état.

3. Véhicule selon la revendication 2, **caractérisé en ce que**, dans sa première position, le cache (8) mobile exerce un effort sur l'interrupteur (10), par exemple un effort de poussée, à l'encontre de l'effort de l'organe (11) de rappel et dispose et maintient l'interrupteur (10) dans son premier état.

4. Véhicule selon l'une quelconque des revendications 1 à 3, **caractérisé en ce que** l'interrupteur (10) est du type pneumatique.

5. Véhicule selon l'une quelconque des revendications 1 à 4, **caractérisé en ce que** le cache (8) est mobile en rotation et/ou en translation entre ses première et seconde positions.

6. Véhicule selon l'une quelconque des revendications 1 à 5, **caractérisé en ce que**, dans son second état, l'interrupteur (10) ouvre au moins une partie du circuit (5) de fluide pour empêcher une mise en pression et la commande pneumatique d'au moins une vanne (12, 14) du circuit (5) de fluide.

7. Véhicule selon l'une quelconque des revendications 1 à 6, **caractérisé en ce que** l'engin (2) de traction comprend ou constitue la source d'électricité et **en ce que** cette source (2) d'électricité est reliée à l'interface (3) de branchement du port (9) de branchement via un ensemble de câbles (7) électrique(s) .

8. Véhicule selon l'une quelconque des revendications 1 à 7, **caractérisé en ce que** le au moins un composant électrique comprend un feux (16) de signalisation du véhicule.

## Patentansprüche

1. Lieferfahrzeug für brennbares Fluid, insbesondere verflüssigtes Fluid wie etwa Wasserstoff, beinhaltend ein Zugfahrzeug (2) und einen Behälter (4), der auf einem durch das Zugfahrzeug (2) gezogenen Träger (13) befestigt ist, wobei das Fahrzeug (1) einen mit dem Behälter (4) verbundenen Fluidkreislauf (5) für die Befüllung und/oder die Entnahme von Fluid beinhaltet, wobei der Fluidkreislauf (5) einen Satz aus einem oder mehreren Pneumatikventilen (12, 14) beinhaltet, wobei das Fahrzeug (1) ferner einen Stromkreis (6) beinhaltet, der mindestens eine elektrische Komponente (16) des durch das Zugfahrzeug (2) gezogenen Trägers (13) beinhaltet, wobei das Fahrzeug (1) eine Stromquelle (2) beinhaltet, die an einer Anschlussschnittstelle (3) über mindestens einen Anschlussport (9) entfernbar mit dem Stromkreis (6) verbunden ist, **dadurch gekennzeichnet, dass** die Anschlussschnittstelle (3) eine Abdeckung (8) beinhaltet, die zwischen einer ersten Stellung, die den Zugang zu dem einen oder den mehreren Anschlussports (9) blockiert, um die elektrische Verbindung zwischen der Stromquelle (2) und dem Stromkreis (6) zu verhindern, und einer zweiten Stellung, die den Zugang zu dem einen oder den mehreren Anschlussports (9) nicht blockiert, um die elektrische Verbindung zwischen der Stromquelle (2) und dem Stromkreis (6) zu gestatten, beweglich ist, wobei das Fahrzeug (1) ferner einen Schalter (10) beinhaltet, der mit dem Fluidkreislauf (5) verbunden ist und zwischen einem ersten Zustand, der den Betrieb des Satzes aus einem oder mehreren Pneumatikventilen (12, 14) des Fluidkreislaufs (5) gestattet, um eine Befüllung oder eine Entnahme zu ermöglichen, und einem zweiten Zustand, der den Betrieb des Satzes aus einem oder mehreren Pneumatikventilen (12, 14) des Fluidkreislaufs (5) nicht gestattet, um eine Befüllung oder eine Entnahme zu verhindern, umschaltbar ist, und dass die bewegliche Abdeckung (8) in ihrer ersten Stellung den Schalter (10) in seinen ersten Zustand umschaltet oder seine Umschaltung in diesen ermöglicht und dass, wenn sich die bewegliche Abdeckung (8) in ihrer zweiten Stellung befindet, der Schalter (10) automatisch in seinen zweiten Zustand umgeschaltet wird.

2. Fahrzeug nach Anspruch 1, **dadurch gekennzeichnet, dass** es ein Rückstellelement (11), wie etwa eine Feder, beinhaltet, die den Schalter (10) in seinen zweiten Zustand drängt.

3. Fahrzeug nach Anspruch 2, **dadurch gekennzeichnet, dass** die bewegliche Abdeckung (8) in ihrer ersten Stellung eine Kraft, beispielsweise eine Schubkraft, entgegen der Kraft des Rückstellelements (11) auf den Schalter (10) ausübt und den Schalter (10) in seinem ersten Zustand anordnet und hält.

4. Fahrzeug nach einem beliebigen der Ansprüche 1 bis 3, **dadurch gekennzeichnet, dass** der Schalter (10) vom Typ Pneumatikschalter ist.

5. Fahrzeug nach einem beliebigen der Ansprüche 1 bis 4, **dadurch gekennzeichnet, dass** die Abdeckung (8) zwischen ihrer ersten und zweiten Stellung rotatorisch und/oder translatorisch beweglich ist.

6. Fahrzeug nach einem beliebigen der Ansprüche 1 bis 5, **dadurch gekennzeichnet, dass** der Schalter (10) in seinem zweiten Zustand mindestens einen Teil des Fluidkreislaufs (5) öffnet, um eine Druckbeaufschlagung und die pneumatische Betätigung mindestens eines Ventils (12, 14) des Fluidkreislaufs (5) zu verhindern.

7. Fahrzeug nach einem beliebigen der Ansprüche 1 bis 6, **dadurch gekennzeichnet, dass** das Zugfahrzeug (2) die Stromquelle beinhaltet oder bildet und dass diese Stromquelle (2) über einen Satz aus einem oder mehreren elektrischen Kabeln (7) mit der Anschlussschnittstelle (3) des Anschlussports (9) verbunden ist.

8. Fahrzeug nach einem beliebigen der Ansprüche 1 bis 7, **dadurch gekennzeichnet, dass** die mindestens eine elektrische Komponente eine Signalleuchte (16) des Fahrzeugs beinhaltet.

## Claims

1. Vehicle for delivering inflammable fluid, in particular liquefied fluid such as hydrogen, comprising a tractor unit (2) and a tank (4) mounted on a support (13) towed by the tractor unit (2), the vehicle (1) comprising a fluid circuit (5) connected to the tank (4) for filling and/or draining fluid, the fluid circuit (5) comprising a set of pneumatic valves (12, 14), the vehicle (1) further comprising an electrical circuit (6) comprising at least one electrical component (16) of the support (13) towed by the tractor unit (2), the vehicle (1) comprising an electricity source (2) detachably connected to the electrical circuit (6) via at least one port (9) for connecting to a connection interface (3), **characterized in that** the connection interface (3) comprises a cover (8) that can move between a first position blocking access to the connection port(s)(9) to prevent the electrical connection between the electricity source (2) and the electrical circuit (6), and a second position not blocking access to the connection port(s) (9) to enable the electrical connection between the electricity source (2) and the electrical circuit (6), the vehicle (1) further comprising a switch (10) connected to the fluid circuit (5) and switchable between a first state enabling the operation of the set of pneumatic valves (12, 14) of the fluid circuit (5) to allow filling or draining, and a second state preventing the operation of the set of pneumatic valves (12, 14) of the fluid circuit (5) to prevent filling or draining, and **in that**, in its first position, the movable cover (8) switches the switch (10) or allows it to be switched to its first state, and **in that** when the movable cover (8) is in its second position, the switch (10) is automatically switched to its second state.

2. Vehicle according to Claim 1, **characterized in that** it comprises a return component (11), such as a spring, urging the switch (10) to its second state.

3. Vehicle according to Claim 2, **characterized in that**, in its first position, the movable cover (8) exerts a force on the switch (10), for example, a thrust force, against the force of the return component (11) and places and keeps the switch (10) in its first state.

4. Vehicle according to any one of Claims 1 to 3, **characterized in that** the switch (10) is of the pneumatic type.

5. Vehicle according to any one of Claims 1 to 4, **characterized in that** the cover (8) is capable of rotational and/or translational movement between its first and second positions.

6. Vehicle according to any one of Claims 1 to 5, **characterized in that**, in its second state, the switch (10) opens at least part of the fluid circuit (5) to prevent pressurization and the pneumatic control of at least one valve (12, 14) of the fluid circuit (5).

7. Vehicle according to any one of Claims 1 to 6, **characterized in that** the tractor unit (2) comprises or forms the electricity source and **in that** this electricity source (2) is connected to the connection interface (3) of the connection port (9) via a set of electrical cables (7).

8. Vehicle according to any one of Claims 1 to 7, **characterized in that** the at least one electrical component comprises an indicator light (16) of the vehicle.
